# NEW EUROPEAN PATENT SPECIFICATION

(11) **EP 0 956 137 B2**
(45) Date of publication and mention of the opposition decision: **27.10.2004**
(45) Mention of the grant of the patent: 24.10.2001
(21) Application number: 97950532.8
(22) Date of filing: 22.12.1997
(51) Int. Cl.: B01D 39/20

(54) **FILTER CASSETTE**
FILTERKASSETTE
CASSETTE A FILTRE

(30) Priority: 23.12.1996 NO 965570
(43) Date of publication of application: 17.11.1999
(73) Proprietor: Thorstensen, Bernt, 0386 Oslo (NO)
(72) Inventor: Thorstensen, Bernt, 0386 Oslo (NO)
(74) Representative: Hayes, Adrian Chetwynd
(86) International application number: PCT/NO1997/000350
(87) International publication number: WO 1998/028060

(56) References cited:
- EP-A- 0 228 631
- EP-A- 0 723 799
- DE-A- 4 330 163

## Description

The present invention relates to a method for cross-flow filtration of liquids.

Filter cassettes have been known and used for a number of years by practically all system builders (OEMs) who supply filter systems with flat filters, often referred to as plate-and-frame systems.

From a historical point of view flat filter systems have employed polymeric or organic filters. Since such filters are generally thin and flexible, they require a support in order to be able to function with an external overpressure. Filter packages are therefore constructed with two filters mounted opposite each other, sealed at the edge, and with a physically robust dividing plate in the space between the two filter plates (filter bodies). This acts simultaneously as a separator screen which permits the permeate to be transported in the space between the filters. The permeate can then be retrieved through one or more holes through the filter surfaces. The separator screen may be produced by means of woven webs or by solid, profiled and often hollow plates of polymers or metallic materials. or by combinations thereof. Such filter packages are termed in the literature filter cassettes, filter pockets or filter discs. Industrial filter systems consist of stacks of filter cassettes mounted on top of one another, with an external or internal manifold which distributes the liquid or gas flow over the filter surfaces.

Until fairly recently, ceramic filters available on the market have exclusively been tubular filters. Flat, ceramic filters have not been commercially available in practice until very recently.

Ceramic filters have the following advantages over polymeric ones. They can be sterilised, are wear-resistant, have a homogeneous pore size, can be used in extreme environments (pH 0-14), withstand high temperatures (up to 1000°C), can be back-flushed (cleaned) under high pressure, and have a long life.

At present ceramic individual filters are manufactured by first making a dough or paste consisting of 40-60% ceramic powder, 2-10% binder, 2-10% plasticizer, 1-2% dispersant and 40-60% solvent. This dough can be formed into tubes and plates (green bodies) by extrusion, pressing, tape-casting or rolling. Green bodies are defined as immature objects, in the sense that they have not been completely processed (usually not fired), and in the following, green describes a state which is not fired. The green components are then sintered at high temperature. During this sintering process all the components are burnt off apart from the ceramic material, and the component emerges as a pure ceramic product. After a supporting substrate with coarse pores has been produced and sintered, one or more intermediate layers of porous ceramic materials are applied. Finally, the desired membrane layer is applied which after sintering obtains the desired pore distribution. Such filters are called asymmetric filters. However, the substrate may also be used as a coarse filter alone.

Flat, ceramic filter cassettes have the following advantages over ceramic tubular filters. In principle they have a higher specific surface (surface area/volume), can be easily adapted to different geometries and offer engineers and designers greater flexibility with regard to the design of the system.

Other ceramic filter cassettes are manufactured by methods which in principle are derived from the production of polymer cassettes [see, e.g., US A 4,902,420 (Pall)]: by laminating the ready-sintered, ceramic plates which form the two filter plates and the separator screen, see JP A 5,228,347 (Horikata), JP A 6,134,267 (Yorita), WO A1 93/00154 (Lescoche), DE A1 43 35 122 (Rennebeck) and US A 4,867,876 (Kopf).

Other patents which cover monolithic, ceramic filters are US A 5,498,288 (Noky) and US A 5,114,581 (Goldsmith). These are based on honeycomb structures, which are one-dimensional and which are usually produced by extrusion. Noky's patent covers a method of plugging a selection of the honeycomb structure's channels, while Goldsmith's patent covers the use of such filters in a dead-end configuration. Dead-end configuration means that all filtered liquid passes through the filter, possibly until it is clogged due to deposits on the filter surface. Due to the said plugging Goldsmith achieves a cleaning of the filter surface by applying a counterpressure through the channels which are open at the rear edge. This will permit the deposited filter cake to be lifted from the filter surface, enabling it to be flushed out for subsequent continuation of the real filtering.

In WO A 96/06314 Sekhar has described the manufacture of monolithic, ceramic filters by means of micropyretic synthesis. This is a new sintering process for three-dimensional ceramic components, as opposed to the present method which covers manufacture of a desired (three-dimensional) shape.

Another technology for production of ceramic filter cassettes is lamination of two or more ceramic plates which form the filter plates and the separator screen in a green state, and then sintering the ready-laminated body. This is described by Koppe in DE C2 43 30 163 and EP A1 723 799. Although this filter may be homogeneous due to the use of the same green material in the filter plates and the spacers, this is not monolithic due to its structure originating from two or more elements joined together. The major disadvantage of this method is that the product has to be manufactured in several parts and joined/laminated before sintering. This gives a relatively complicated. multi-stage process, with a joining process which makes great demands on accuracy, cleanliness and performance. Defects can arise in the joint, thus reducing the end product's mechanical properties and strength. The same can be said for the method described in US A 5,326,512 (Stillwagon).

According to the present invention a method is provided for filtering a liquid by cross-flow filtration according to claim 1.

Cross-flow filtration means that the substance which has to be filtered is sent at high speed across the filter surface (thereby dislodging deposited material), while the pure product is pressed down through the surface (perpendicular to the filtrate flow). Cross-flow filtration is superior to dead-end filtration with regard to continuous operation and high efficiency.

A monolithic, ceramic filter cassette consists of a filter body or substrate in an open, porous, monolithic, ceramic material with large pores (>1µm). This filter body forms the structure of the cassette, guaranteeing the mechanical and chemical properties. The active membrane layers can then be applied on the outside (or inside) of this filter body in one or more layers, until the desired pore size has been achieved.

The advantage of manufacturing monolithic filter cassettes is that there are no internal joints or interfaces which can weaken the mechanical properties of the finished product. In addition the manufacturing process is reduced in principle to a single stage process for obtaining an easy to handle, green product, before the final sintering to form a monolithic, ceramic filter body. This filter body is well-suited for application of the active membrane layer(s).

The manufacture of the filter body used in the present invention includes casting thereof, preferably in such a form that the geometry and appearance are exactly defined. In order to achieve this the green material must be of sufficiently low viscosity at the moment of casting and harden rapidly when the mould has been filled. By this means the casting mould can be filled accurately, and the ready-hardened green filter body has both the exact form desired for the finished product and is easy to handle for further sintering and processing. The most important advantage over Koppe's method is that filter bodies produced do not have internal joining surfaces which can reduce the mechanical properties of the completed filter cassette, but are monolithic, i.e. they constitute a uniform and complete structure (monolithic = made in one piece).

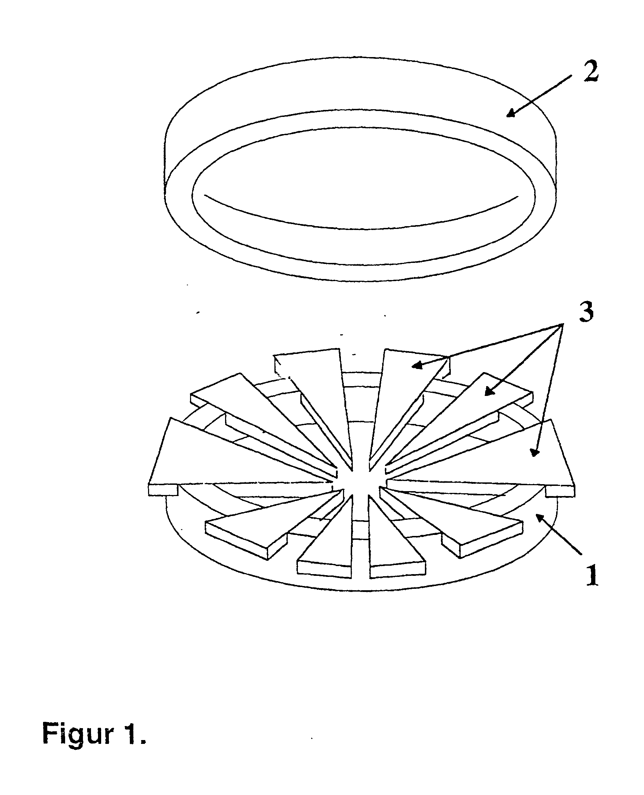

Figure 1 illustrates a principle diagram of the casting mould for the filter body. The mould consists here of a bottom 1 and a top 2 with, for example, ten individual insert discs 3 for the drainage channels in the final filter body.

Filter cassettes which are manufactured in this manner can have an arbitrary geometry, consisting of everything from a highly symmetrical shape such as circular, via elliptical, rectangular, trapezoidal, to highly irregular, free shapes. Typical thicknesses for the cassettes will be from 1 mm to 10 mm. depending on the mechanical and functional requirements for the cassette.

The common feature of all the shapes is that the cassettes have a large surface area in relation to the volume. One method of achieving this is to give the filter cassette two large. flat surfaces, which may be parallel or nonparallel. These form the active filter surfaces, through which the purified medium is pressed orfiltered. The filtered medium is discharged from the cassette through one or more openings through the filter surface or the periphery of the cassette. The periphery can naturally also be used as an active filter, but here the path for the filtered medium through the substrate wilt often be longer.

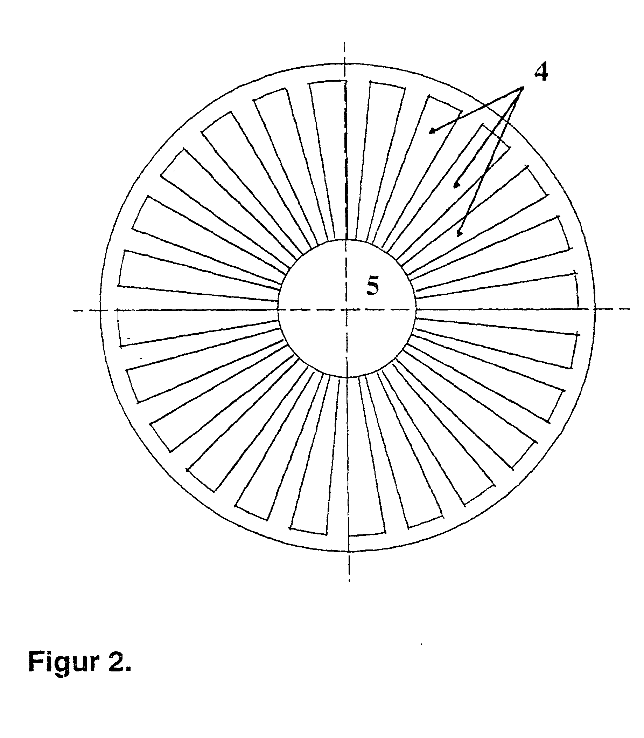

Figure 2 shows an intersected filter body with drainage channels and a centre hole for drainage of the filtrate. The drainage channels 4 and centre hole 5 are illustrated in the figure.

The functional membrane may be a microfilter, ultrafilter, nanofilter or an RO filter, consisting of an organic or inorganic material. The active membrane layers can be applied either externally or internally in the cassette. The methods of application of the active membrane layers may be tape casting, slip casting, screen printing, gel casting or sol-gel coating.

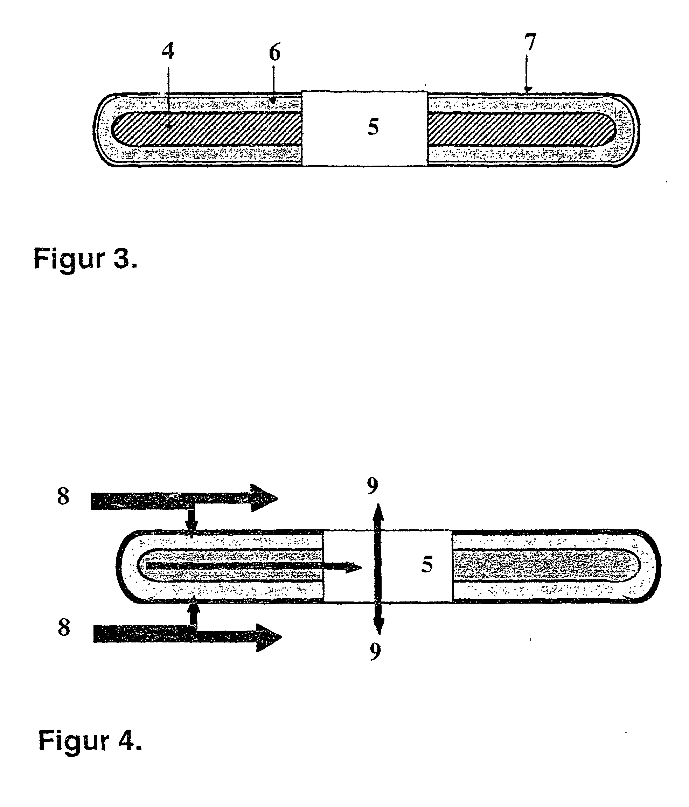

Figure 3 shows the cross section of a filter cassette with drainage 4, substrate or support 6, centre hole 5 and membrane layer 7.

Figure 4 is a diagram of the flow pattern over a filter cassette, with the liquid which has to be filtered 8 flowing over the surface of the filter cassette and the pure filtrate 9 which is transported through the drainage out to the centre hole 5 from which it can be transported out.

## Claims

1. A method for filtering a liquid, said method comprising:
manufacturing a flat, porous, ceramic filter cassette with a large surface-to-volume ratio, wherein a dough or paste, which is produced by mixing a ceramic material together with one or more of the elements binder, plasticizer, dispersant and solvent is used to manufacture a flat, porous, ceramic filter body forming the substrate for functional membranes applied in one or more layers, **characterized in that** said filter body is cast into a monolithic product, with a core consisting of a material with a coarser ceramic powder in order thereby to increase the ready-sintered pore radius without internal joints or interfaces, in a casting mould consisting of one or more parts, with inserts which correspond to drainage channels for increased drainage, wherein the casting material which has a sufficiently low viscosity to fill the mould at the moment of casting and which hardens rapidly when the mould has been filled, and the filter body cast into a monolithic product is consequently sintered and afterwards said functional membrane layers are applied, and
using the filter cassette to filter a liquid by crossflow filtration.

2. A method according to claim 1, **characterized in that** the casting process can take place in the presence of an over or underpressure.

3. A method according to claim 1, **characterized in that** openings to discharge the filtered medium from the cassette are produced by means of a profile-shaped casting mould.

4. A method according to claim 1, **characterized in that** the functional membrane covers the entire external surface of the cassette.

5. A method according to claim 1, **characterized in that** the functional membrane covers the entire internal surface of the cassette.

6. A method according to claim 1, **characterized in that** the functional membrane consists of an organic or inorganic material.

7. A method according to claim 6, **characterized in that** the functional membrane layers are applied by tape-casting, slip casting, screen printing, gel casting or sol-gel coating.

8. A method according to claim 1, **characterized in that** the filter cassette contains one or more openings through the filter surface or the periphery suitable for discharging the filtrated medium from the cassette.

## Patentansprüche

1. Verfahren zum Filtern einer Flüssigkeit, wobei das Verfahren folgendes umfasst:
- Herstellung einer, flachen, porösen Keramikfilterkassette mit einem grossen Oberflächen-Volumen-Verhältnis, bei der eine formbare Masse oder Paste, die durch Vermischen eines Keramikmaterials mit einem oder mehreren der Elemente Bindemittel, Weichmacher, Dispergator und Lösungsmittel hergestellt wird, zur Herstellung eines flachen, porösen, hohlen Keramikfilterkörpers verwendet wird, der das Substrat für in einer oder mehreren Schichten aufgebrachte Funktionsmembranen bildet,
**dadurch gekennzeichnet, dass** der Filterkörper als ein monolithisches Produkt mit einem Kern der aus einem Material mit gröberem Keramikpulver besteht, um dadurch den fertig gesinterten Porenradius zu vergrössern, ohne innere Verbindungsstellen oder Grenzflächen in einer Gussform gegossen wird, die aus einem oder mehreren Teilen besteht, mit Einlegeteilen, die Ableitekanälen für eine erhöhte Ableitung entsprechen, wobei das Gussmaterial, das eine ausreichend niedrige Viskosität besitzt, um die Form beim Giessen zu füllen, und das nach dem Füllen der Form schnell härtet, und der zu einem monolithischen Produkt gegossene Filterkörper anschliessend gesintert wird, und danach die Funktionsmembranschichten aufgebracht werden, und die Filterkassette verwendet wird, um eine Flüssigkeit mittels Querstromfiltration zu filtern.

2. Verfahren nach Anspruch 1,
**dadurch gekennzeichnet, dass** der Gussvorgang im Beisein eines Über- oder Unterdrucks stattfinden kann.

3. Verfahren nach Anspruch 1,
**dadurch gekennzeichnet, dass** Öffnungen zum Ablauf des gefilterten Mediums aus der Kassette mittels einer profilgeformten Gussform hergestellt werden.

4. Verfahren nach Anspruch 1,
**dadurch gekennzeichnet, dass** die Funktionsmembran die gesamte äussere Oberfläche der Kassette bedeckt.

5. Verfahren nach Anspruch 1,
**dadurch gekennzeichnet, dass** die Funktionsmembran die gesamte innere Oberfläche der Kassette bedeckt.

6. Verfahren nach Anspruch 1,
**dadurch gekennzeichnet, dass** die Funktionsmembran aus einem organischen oder anorganischen Material besteht.

7. Verfahren nach Anspruch 6,
**dadurch gekennzeichnet, dass** die Funktionsmembranschichten durch Foliengiessen, Schlickerguss, Siebdruck, Gel-Guss oder Sol-Gel-Guss aufgebracht werden.

8. Verfahren nach Anspruch 1,
**dadurch gekennzeichnet, dass** die Filterkassette eine oder mehrere Öffnungen durch die Filteroberfläche oder die Peripherie umfasst, die sich zum Ablauf des filtrierten Mediums aus der Kassette eignen.

## Revendications

1. Un procédé de filtration d'un liquide, le procédé comprenant:
la fabrication d'un module de filtration en céramique poreux plat, avec un grand rapport surface/volume, dans lequel une pâte, qui est produite en mélangeant un matériau céramique avec un ou plusieurs des éléments liants, plastifiants, dispersants et solvants, est utilisée pour fabriquer un corps filtrant plat, poreux, céramique, formant le substrat pour des membranes fonctionnelles appliquées en une
ou plusieurs couches,
**caractérisé en ce que** ledit corps filtrant est moulé en un produit monolithique, avec un coeur consistant en un matériau formé d'une poudre de céramique plus grossière en vue d'augmenter le rayon des pores prêts pour le frittage, sans joints internes ou interfaces,
dans un moule de coulée constitué d'une ou plusieurs parties, avec des inserts qui correspondent à des canaux de drainage pour un drainage intensifié, le matériau de coulée ayant une viscosité suffisamment basse pour remplir le moule au moment du moulage et se rigidifiant rapidement lorsque le moule a été rempli, et le corps filtrant moulé en un produit monolithique étant par la suite fritté et ensuite lesdites couches de membrane fonctionnelle étant appliquées, et
l'utilisation du module de filtration pour la filtration d'un liquide par filtration à flux croisés.

2. Un procédé selon la revendication 1,
**caractérisé en ce que** le processus de moulage peut avoir lieu en présence d'une surpression ou d'une dépression.

3. Un procédé selon la revendication 1,
**caractérisé en ce que** les ouvertures pour décharger le milieu filtré du module sont produites au moyen d'un moule ayant une forme profilée.

4. Un procédé selon la revendication 1,
**caractérisé en ce que** la membrane fonctionnelle couvre la surface externe entière du module.

5. Un procédé selon la revendication 1,
**caractérisé en ce que** la membrane fonctionnelle couvre la surface interne entière du module.

6. Un procédé selon la revendication 1,
**caractérisé en ce que** la membrane fonctionnelle consiste en un matériau inorganique ou organique.

7. Un procédé selon la revendication 1,
**caractérisé en ce que** les couches de membrane fonctionnelle sont appliquées par coulée en bande, coulée en barbotine, sérigraphique, coulée par gel, ou enduction de sol-gel.

8. Un procédé selon la revendication 1,
**caractérisé en ce que** le module contient un ou plusieurs orifices à travers la surface de filtration ou la périphérie, aptes à décharger le milieu filtré du module.
